## Europäisches Patentamt

## European Patent Office

## Office européen des brevets

(11) Publication number: **0 028 404**
**B1**

(12) **EUROPEAN PATENT SPECIFICATION**

(45) Date of publication of patent specification: **19.10.83**

(51) Int. Cl.³: **H 04 Q 1/457**

(21) Application number: **80106678.8**

(22) Date of filing: **31.10.80**

(54) Receiver for push-button PCM-encoded multifrequency signals.

(30) Priority: **05.11.79 IT 6914979**

(43) Date of publication of application:
**13.05.81 Bulletin 81/19**

(45) Publication of the grant of the patent:
**19.10.83 Bulletin 83/42**

(84) Designated Contracting States:
**DE FR GB NL SE**

(56) References cited:
**US - A - 4 080 516**

**THE BELL SYSTEM TECHNICAL JOURNAL, vol. 56, no. 8, October 1977, New York, USA CHRISTOPHER et al. "An evaluation of two simple methods for detecting tones over telephone lines", pages 1513—1529**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Girardi, Guglielmo**
**Via del Porto, 70**
**S. Mauro Torinese-Torino (IT)**
Inventor: **Miroglio, Franco**
**C.So Regina Margherita, 211**
**Torino (IT)**

(74) Representative: **Riederer Freiherr von Paar zu Schönau, Anton**
**Freyung 615 Postfach 2664**
**D-8300 Landshut (DE)**

# Receiver for push-button PCM-encoded multifrequency signals

The present invention relates to multifrequency signalling recognition and more particularly it refers to a receiver for multifrequency signals from push-button telephone sets.

In up-to-date digital telephone exchanges the signal sent by the telephone set is PCM encoded already at the level of the subscriber's line circuit, i.e. prior to being switched.

It comes out that if the telephone set is a multifrequency push button telephone set, also the dialling signals are PCM encoded and under such form they ought to be identified, in order to avoid a double conversion that could be too expensive.

Push-button signal receivers known in the technology are apt to process a non-sampled signal, that is non quantized in time, and basically consist of two analog band-split filters followed each by a limiter circuit; the outputs of said limiter circuits are analyzed by a recognizing circuit that extracts the dialled digit and sends it to the exchange; yet said known receivers are not apt to handle the sampled signals and besides present complex and cumbersome structures as they are not apt to a large-scale monolithic integration.

A certain improvement of said known receivers has been attained by introducing the known "zero-crossing detecting" technique, described for example in the paper: "An Evaluation of Two Simple Methods for Detecting Tones over Telephone Lines", D. K. Christopher et al., The Bell System Techn. Journal, vol. 56, No. 8, October 1977. According to this technique the recognizing circuit extracts the dialled digits on the basis of the determination of the zero-crossing instants of the analogue input signal, and may be large-scale integrated (it is made, for example, by Mostek and identified by the name MK5102N—5).

These kinds of known recognition circuits cannot be used when the input signal to the receiver is PCM encoded.

In fact, in such a case, band-split filters must be digital and the samples at the output of each of the two filters are so distant in time that the precision in the determination of the zero-crossing instants (and then the edges of waveform outgoing from each limiter) is so low as to render said large-scale integrated recognizing circuit quite useless.

A receiver apt to process sampled signals is described in the US-Patent No. 4,080,516, granted on March 21, 1978; such a receiver does not operate according to the zero-crossing detecting technique, but embodies the functions of splitting high and low band frequencies and determining the presence or absence of frequency components in these bands by means of digital filters. Such a receiver has a very complex and expensive structure due to the high number of digital filters required, and a large-scale integration of it would not be convenient.

The problem the invention is based upon is to provide for a receiver for push-button PCM-encoded multifrequency signals, the receiver being not too complex and thus lending itself to a large-scale integration while at the same time providing for a high demodulating precision so as to avoid any respective errors.

This problem is solved by a receiver consisting of digital filters followed by control signals controlling the levels of the signals produced by said filters, and a circuit recognizing the digit transmitted by means of said multifrequency signals, which receiver according to the invention is characterized in that said digital filters are two band-split digital filters and in that between said control circuits and said circuit recognizing the digit two limiter-interpolator circuits are inserted apt to determine the zero-crossing instants of the analogue waveforms from which the PCM encoded multifrequency signals have been obtained.

According to this arrangement, the digital filters have the function of band-splitting and are followed by the two limiter-interpolator circuits that allow to improve, with an error much smaller than the sampling interval of PCM, the determination of the instant of zero-crossing of the envelope of the waveform corresponding to the sequence of samples present at the output of the filters.

These and other characteristics of the present invention will become clearer from the following descriptions of an embodiment thereof, given by way of example and not in a limiting sense, taken in connection with the annexed drawings in which:

Figure 1 is a block diagram of the multifrequency signal receiver according to the invention;

Figure 2 is a detailed block diagram of one of the two blocks, structurally equal, denoted by SIA, SIB in Figure 1;

Figure 3 is a logic table designed to explain the operation of the block denoted by RS in Figure 2;

Figure 4 is the schematic representation of waveforms explaining the operation of the device as in Figure 2;

Figure 5 is a diagram meant to explain the interpolation criterion used in the present invention.

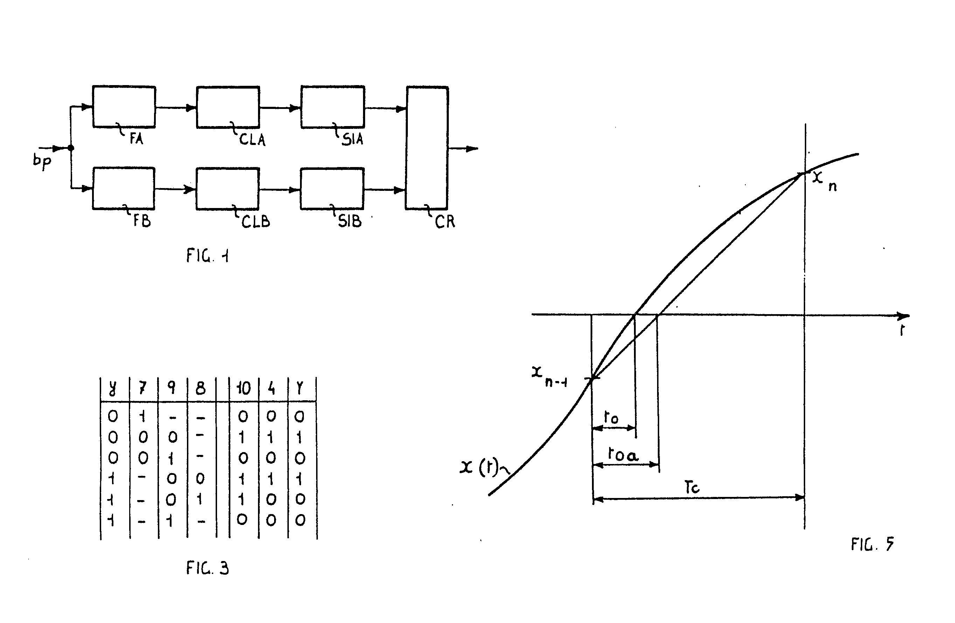

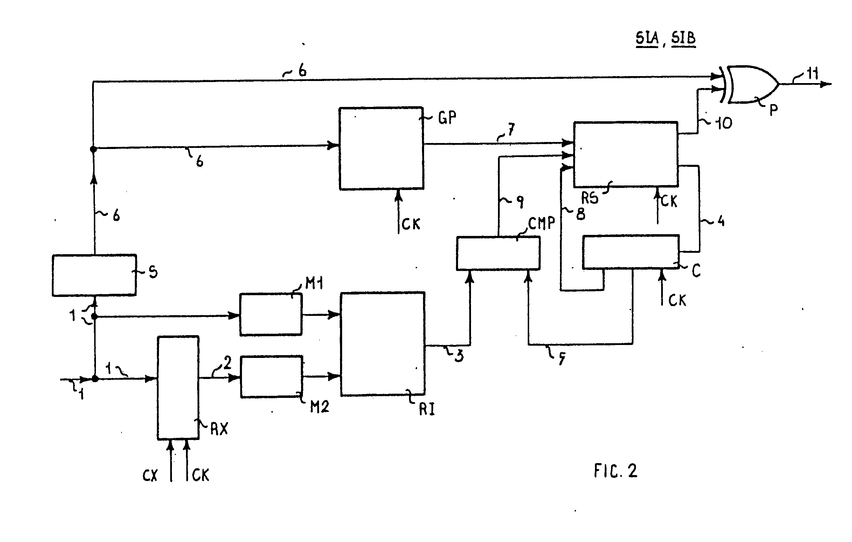

In Figure 1 reference bp denotes the bits, present at the receiver input, corresponding to the PCM encoded digital values of the multifrequency signal samples.

Reference FA denotes a digital filter of known type apt to receive bits bp and process them so as to split the samples relating to high frequencies from those relating to low frequencies, leaving the first through.

**0 028 404**

Reference FB denotes an analogous digital filter apt to let through the samples relating to low frequencies.

It is useful to remember to this end that for multifrequency receivers low frequencies are comprised between 697 Hz and 941 Hz and high frequencies are comprised between 1209 Hz and 1633 Hz.

References CLA and CLB denote two circuits apt to control the signal level and able to allow the passage of the signal received at its proper input from FA and FB only when said level is higher than a predetermined threshold, that can for instance be deduced from CEPT specifications on multifrequency signalling receivers.

References SIA and SIB denote two limiter interpolator circuits identical to each other, respectively connected to the outputs of CLA, CLB; SIA and SIB are apt to determine, with sufficient precision with respect to the sampling interval, the zero-crossing instant of the waveform envelope corresponding to the sequence of samples received by CLA and CLB.

The structure and the operation of SIA, SIB will be examined afterwards in connection to Figure 2.

Reference CR denotes a recognizing circuit of any known type able to decode the digit transmitted on the basis of the pair of signals it receives both from SIA and SIB.

In Figure 2 reference RX denotes a conventional register of the parallel type, synchronous with a clock signal CK (of frequency $f_{cv}$ and period $T_{cv}$), able to delay by a time equal to a period $T_c$ of sampling frequency $f_c$ the binary samples received at the input on connection 1.

This delay is obtained by means of a control signal CX, consisting of a pulse of duration $T_{cv}$ that is repeated with frequency $f_c$; CX operates in the following way: when CX is at logic level "1" register RX stores the sample present at the input on connection 1; when on the contrary CX is at logic level "0" register RX keeps the sample present at the output on connection 2.

Signals CK and CX examined before correspond respectively to the clock signal and the frame synchronism of PCM and are usually extracted from the flow of the PCM signal within the exchange in which the device object of the invention is inserted.

Reference S denotes a circuit of known type apt to separate and let through the sign bit with respect to other bits of the samples received at the input, connected to connection 1. It is accepted that the positive or zero value samples correspond to logic value "1" and the negative samples to logic value "0".

References M1, M2 denotes two circuits of known type apt to separate and let through just the bits coding the modulus of the received samples; the inputs of M1 and M2 are connected to connections 1 and 2, respectively upstream and downstream RX.

Reference RI denotes a logic interpolating network able to receive at the input from M1 and M2 the moduli of two samples subsequent in time, to effect on them suitable arithmetic operations that will be defined hereinafter, and to emit the result at the output on connection 3.

Once said arithmetic operations are defined, the embodiment of a logic network such as RI is not a problem to the skilled in the art.

Reference P denotes a usual EX—OR logic gate.

Reference GP denotes a circuit able to generate a pulse, having a duration equal to period $T_{cv}$ of the clock signal, in concomitance with the transitions of the input signal, that GP receives from circuit S, through wire 6.

Circuits such as GP are well known in the technique.

Reference C denotes a usual modulo-N counter ($N=f_{cv}/f_c$), synchronous with the clock signal CK and synchronously resettable by the signal it receives from wire 4, if this signal is reset to logic value "0", or enabled to the counting if this signal is set to logic value "1".

Counter C has two outputs: the first, connected to connection 5, supplies a comparator CMP, that will be examined hereinafter, with the contents of the counter itself; the second, connected to wire 8, generates a logic value "1" when the counter reaches the maximum counting value, that in our case is equal to N—1.

Reference CMP denotes a usual logic comparator able to produce at the output on wire 9 a logic "1" when the binary digits it receives at its two inputs, connected to counter C and to the interpolating network RI, are equal; CMP produces a logic "0" in the opposite case.

Reference RS denotes a sequential logic network defined by the table of the transitions and of the outputs represented in Figure 3.

In the table of Figure 3 columns denoted by $y$ and $Y$ represent respectively the present and future states of sequential logic RS (Figure 2), synchronous with clock signal CK; the columns denoted by 7, 9, 8 represent logic levels present on the input wires of RS, denoted by the same numbers and those denoted by 10, 4 represent the logic levels present on the output wires of RS.

With respect to the state y of RS and to the logic levels present on input wires 7, 9, 8, there are denoted the logic levels present on output wires (10, 4) and state (Y) that RS will assume after the future front of clock signal CK. The horizontal dashes of the table of Figure 3 denote that the logic value present on the wire relative to the column considered does not care to determine the values of the outputs and of the future state.

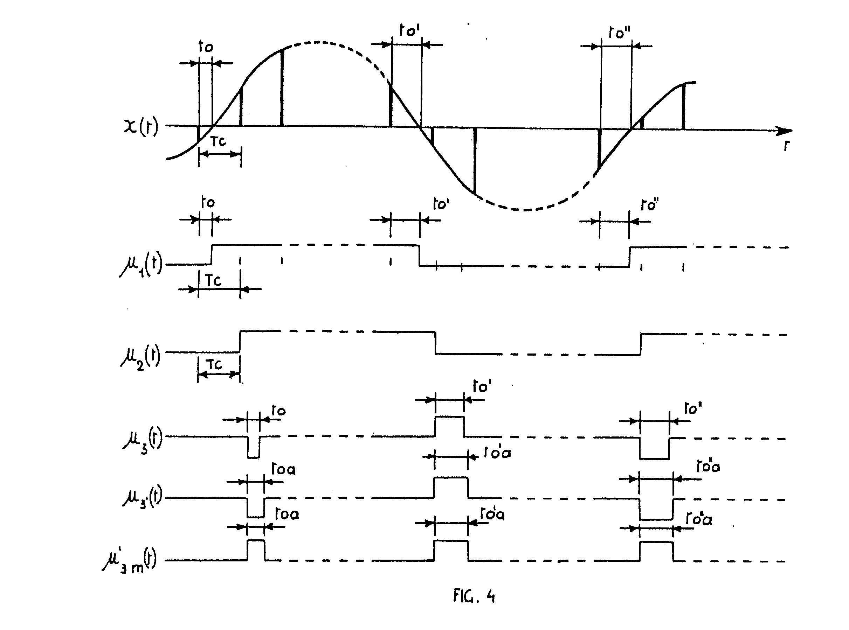

In Figure 4 reference x(t) denotes a sinusoidal signal of analogue type in which some portions of curves have been shown corresponding to the zero-crossing instants and to the sampling instants at which the samples present at the input of circuit SIA or SIB (Figure 1) are supposed to be extracted; reference $T_c$ denotes the period of the sampling frequency; references *to, to', to''* denote the times elapsing between the sampling instant before a sign change of the sinusoid and the zero-crossing instant.

Further in Figure 4 function $\mu_1(t)$ represents the trends in time of the sinusoid sign x(t) prior to its sampling; function $\mu_2(t)$ represents the sign trend of sinusoid x(t) after sampling; the function $\mu_3(t)$ represents the difference between $\mu_1(t)$, delayed by a sampling period $(T_c)$, and function $\mu_2(t)$:

$$\mu_3(t) = \mu_1(t - T_c) - \mu_2(t) \qquad (1)$$

It has now to be underlined that known recognizing circuits (see CR in Figure 1) can perfectly carry out their task on non-sampled signals as the signal they receive at the input is of type $\mu_1(t)$, in which the waveform fronts perfectly coincide with the zero-crossing instants of x(t).

Whenever on the contrary the sampled signals are to be analyzed, recognizing circuits would receive at the input the waveform $\mu_2(t)$ whose fronts badly correspond to the zero-crossing instants of x(t) making a non-negligible error that is represented in time by a function of type $\mu_3(t)$ of Figure 4 and analytically expressed in (1).

The device object of the present invention overcomes this error, by obtaining an approximate function of $\mu_1(t - T_c)$, hereinafter referred to as $\mu_1'(t - T_c)$, obtained by the addition of $\mu_2(t)$, that is known, and by an approximate expression $\mu_3'(t)$ of function $\mu_3(t)$.

To construct $\mu_3'(t)$ there are computed, before all, times *to, to', to''* ... relative to the function $\mu_3(t)$ by using the rules of linear interpolation that will be disclosed hereinafter in connection to Figure 5.

In Figure 5 there is represented on an enlarged scale a zero crossing of sinusoid x(t) of Figure 4. References $x_{n-1}$ and $x_n$ denote the sample falling respectively before and after the sign change of x(t); to and $T_c$ denote the same times as in Figure 4.

Reference $t_{oa}$ denotes the approximate value of $t_o$ obtained, as seen in Figure 5, by joining a segment of straight line the points having as ordinates $x_{n-1}$ and $x_n$.

Said time $t_{oa}$ can be obtained, by applying the linear-interpolation rules, from the following relationship:

$$t_{oa} = \frac{|x_{n-1}|}{|x_n| + |x_{n-1}|} . Tc \qquad (2)$$

where $x_n$ and $x_{n-1}$ denote the absolute values of samples $x_n$ and $x_{n-1}$.

By calling $f_{cv}$ a frequency equal to N times the sampling frequency $f_c$, time $t_{oa}$ can be measured in multiples $N_{oa}$ of period $T_{cv}$ of $f_{cv}$. In this way (2) becomes: $N_{oa}$=integer part of

$$\left\{ \frac{|x_{n-1}| . N}{|x_n| + |x_{n-1}|} \right\} \qquad (3)$$

Once times such as $t_{oa}$, $t'_{oa}$, $t''_{oa}$ ... and digits like $N_{oa}$, $N'_{oa}$, $N''_{oa}$ ..., are extracted, the device, object of the present invention generates the waveform $\mu_{3m}(t)$, that is equal to the absolute value of the waveform $\mu_3'(t)$, and performs the function exclusive-OR between the waveforms $\mu'_{3m}(t)$ and $\mu_2(t)$ obtaining the wanted waveform $\mu'_1(t - T_c)$.

The operation of the device depicted in Figure 2 will be now described.

The computation of $N_{oa}$ according to the relationship (3) is performed by logic interpolator network RI of Figure 2. Waveform $\mu'_{3m}(t)$ is originated by circuit RS (Figure 2) on wire 10 connected to an input of gate P; the waveform $\mu_2(t)$ is originated by circuit S on wire 6, connected to another input of gate P.

Function EX—OR between waveforms $\mu_2(t)$ and $\mu'_{3m}(t)$ is carried out by gate P that produces at the output on wire 11 the required waveform $\mu'_1(t - T_c)$.

Register RX acts as delay line for a time equal to a sampling interval $T_c$; in this way on connections 1 and 2 there are always present two subsequent samples of the input signal.

The values of the moduli of said two samples are present at the outputs of M1 and M2 while the sign of the present sample is present at the output of S.

At the beginning of each sampling interval $(T_c)$ network RI supplies at the output, on connection 3, a number computed on the basis of relation (3).

Said number has value $N_{oa}$ only in the case when the two examined samples are of the type of $x_n$ and $x_{n-1}$, that is of opposite sign.

This condition is detected by circuit GP that emits at the output on wire 7 a logic zero whenever at its input, connected to wire 6, a transition occurs from logic value "0" to value "1" or vice-versa.

Blocks CMP, C and RS of the diagrams of Figure 2 cooperate to keep, from the instant of the sign change, the output of RS connected to wire 10 at logic level "1" for a time equal to $N_{oa}$ periods of the clock signal CK, that is for a time $N_{oa}.T_{cv}$, thus producing the waveform $\mu'_{3m}(t)$ of Figure 4.

Supposing for instance that sequential logic network RS is in state "0" (y=0 in Figure 3); as long as the output of GP keeps the logic level "1" on wire 7, independently of the logic value assumed by wires 8 and 9, a logic "0" will be present an wire 10.

Under the same conditions at the arrival of the wavefront of clock signal CK, counter C is still reset to zero, as on wire 4 there is present a logic "0" and network RS does not modify its state.

When on the contrary, the output of GP goes to "0" the two following cases are possible:

1) the value of $N_{oa}$, present on connection 3, is equal to zero and is then equal to the present value outgoing from counter C (what, as results from the table of Figure 3, is detected by the presence of a logic "1" on wire 9): in this case outputs 10 and 4 are still kept at "0" and counter C does not modify its contents.

2) the value of $N_{oa}$ is different from zero and therefore is different from the one present at the output of counter C, what has been detected (Figure 3) by the presence of a logic "0" on wire 9: in this case outputs 10 and 4 are kept at "1".

At the arrival of the clock signal CK counter C will be incremented by one step and circuit RS will pass into state "1".

Network RS being now in state "1" (y=1 in the table of Figure 3), the following situations of input are possible:

1) the value of $N_{oa}$, present on connection 3, is equal to the present value of output of counter C (presence of a logic "1" on wire 9); in such a case on wire 10, at the output of RS, there is present a logic "0" and at the arrival of the wave front of clock signal CK counter C will be reset to zero and the network RS will be brought again to state "0".

2) the value of $N_{oa}$, present on connection 3, is different from the present value of counter C (presence of a logic "0" on wire 9).

In such a case, as long as a logic "0" is present on wire 8 (C has not reached its maximum value), outputs 10 and 4 are kept at "1" and as a consequence at the arrival of the wave front of the clock signal CK counter C will be increased by a step and network RS will remain in state "1".

If, on the contrary a logic "1" is present on wire 8 (C has reached its maximum value) output 10 is placed again at a logic "1", while output 4 is placed at "0" and, as a consequence, at the arrival of the wave front of the clock signal CK, counter C is reset to zero and network RS is brought again to state "0".

## Claims

1. Receiver for push-button PCM-encoded multifrequency signals, consisting of digital filters (FA, FB) followed by control circuits (CLA, CLB) controlling the levels of the signals produced by said filters, and a circuit (CR) recognizing the digit transmitted by means of said multifrequency signals, characterized in that said digital filters are two band-split digital filters (FA, FB) and in that between said control circuits (CLA, CLB) and said circuit (CR) recognizing the digit two limiter-interpolator circuits (SIA, SIB) are inserted apt to determine the zero-crossing instants of the analogue waveforms from which the PCM encoded multifrequency signals have been obtained.

2. Receiver for push-button PCM-encoded multifrequency signals as in claim 1, characterized in that each of said limiter-interpolator circuits (SIA, SIB) consists of:

— a register (RX) of parallel type apt to operate as delay line, for a time equal to a sampling period $(T_c)$, on the samples received from one of said digital filters (FA, FB);

— a sign separating circuit (S), apt to determine the sign of the samples received from said digital filter, and to supply its output with a signal whose logic level varies when the sign of the received samples varies;

— an interpolating network (RI) connected by means of a first (M1) and a second (M2) modulus separating circuit respectively upstream and downstream said register (RX), apt to effect, at each sampling periods $(T_c)$, on the two samples respectively present upstream $(x_{n-1})$ and downstream $(x_n)$ the register, a linear interpolation according to the expression:

$$N_{oa} = I \left\{ \frac{|x_{n-1}| N}{|x_n| + |x_{n-1}|} \right\}$$

in which:
I denotes the integer part of what is bracketed; N is the ratio between the frequency $(f_{cv})$ of a clock signal (CK) and the sampling frequency $(f_c)$; $|x_{n-1}|$ is the value of the modulus of the sample present downstream the register, supplied by said second modulus separating circuit (M2); $|x_n|$ is the value of the modulus of the sample present upstream the register, supplied by said first modulus separating circuit (M1); $N_{oa}$ is the interpolation product supplied at the output of the interpolating network (RI);

— a pulse generator circuit (GP) able to generate a pulse, having a duration equal to the period $(T_{cv})$ of the clock signal (CK), whenever at its input, connected to the output (6) of said sign separating circuit (S), a variation in the logic level takes place;

— a modulo-N synchronous counter (C) which supplies its first output (5) with the present reached value, supplies its second output (8) with a pulse when the maximum value is reached, and receives an enabling or a resetting signal respectively for starting or interrupting the counting;

— a logic comparator (CMP) which supplies its output (9) with a signal indicative of the equality of the signals it receives from the output of said interpolating network (RI) and from the first output (5) of said counter (C);

— a sequential logic network (RS) which receives the output (7) of said pulse generator circuit (GP), the output (9) of said logic comparator (CMP) and the second output (8) of said counter (C); supplies said counter (C), via a first output (4), with said enabling signal, whenever it receives a pulse from said pulse generator circuit (GP), or with said resetting signal, whenever it receives the equality signal from said logic comparator (CMP); and supplies its second output (10) with a signal whose logic level is active for a time interval equal to $N_{oa} . T_{cv}$ starting from the instant in which it receives a pulse from said pulse generator circuit (GP);

— an EX—OR logic gate (P) which supplies its output, that is also the output of the limiter-interpolator circuit (SIA, SIB), with the exclusive-OR of the logic value present on the second output (10) of said sequential logic network (RS) and of the logic value coming from said sign separating circuit (S).

3. Receiver for push-button PCM-encoded multifrequency signals as in claim 2, characterized in that the interpolation product computed by said interpolating network (RI) is equal to $N_{oa}$ only when said samples upstream $(x_{n-1})$ and downstream $(x_n)$ said register (RX) have opposite sign.

**Revendications**

1. Récepteur de signaux en multifréquence de clavier codifiés en MIC, comportant des filtres numériques (FA, FB) suivis par des circuits de contrôle (CLA, CLB) du niveau du signal produit par ces filtres, et par un circuit de reconnaissance (CR) du chiffre transmis au moyen de ces signaux multifréquence, caractérisé en ce que lesdits filtres numériques (FA, FB) sont deux filtres numériques séparateurs de bande, et en ce que entre lesdits circuits de contrôle (CLA, CLB) et ledit circuit de reconnaissance (CR) du chiffre transmis, on a inséré deux circuits de quadrature et interpolation (SIA, SIB) aptes à déterminer l'instant de passage pour zéro des formes d'onde analogiques dont l'on a obtenu le signal multifréquence codifié en MIC.

2. Récepteur de signaux multifréquence de clavier codifiés en MIC, suivant la revendication 1, caractérisé en ce que chacun de ces circuits de quadrature et interpolation (SIA, SIB) est constitué par:

— un registre (RX) de type parallèle apte à opérer, tel qu'une ligne de retard pour retarder d'un temps égal à une période d'échantillonage $(T_c)$ les échantillons reçus d'un desdits filtres numériques (FA, FB);

— un circuit séparateur de signe (S), apte à déterminer le signe des échantillons reçus dudit filtre numérique, et à fournir à la sortie un signal dont le niveau logique varie avec le signe des échantillons reçus;

— un réseau d'interpolation (RI) connecté au moyen d'un premier (M1) et un second (M2) circuits séparateurs de module respectivement en amont et en aval dudit registre (RX), et apte à effectuer à chaque intervalle d'échantillonnage $(T_c)$, sur les deux échantillons présents l'un en amont $(x_{n-1})$ et l'autre en aval $(x_n)$ du registre, une interpolation linéaire suivant l'expression:

$$N_{oa} = I\left\{ \frac{|x_{n-1}| . N}{|x_n| + |x_{n-1}|} \right\}$$

où I indique que l'on doit considérer la partie entière de ce qui est renfermé entre parenthèses, N est le rapport entre la fréquence $(f_{cv})$ du signal d'horloge (CK) et la fréquence $(f_c)$ d'échantillonnage, $|x_{n-1}|$ est la valeur du module de l'échantillon en aval du registre, fournie par ledit second circuit (M2) séparateur du module; $|x_n|$ est la valeur du module de l'échantillon en amont du registre, fournie par ledit premier circuit (M1) séparateur de module; $N_{oa}$ est le produit de l'interpolation fourni à la sortie du réseau d'interpolation (RI);

— un circuit générateur d'impulsions (GP) apte à engendrer une impulsion, ayant une durée égale à la période $(T_{cv})$ du signal d'horloge (CK), chaque fois qu'à sont entrée, connectée à la sortie du séparateur de signe (S), il y a une variation de niveau logique;

— un compteur (C) synchrone modulo—N apte à fournir à sa première sortie (5) la valeur atteinte du comptage, et à sa seconde sortie (8) une impulsion lorsqu'il a atteint la valeur maximum de comptage, et il reçoit un signal de validation ou de remise à zéro respectivement pour le début ou l'interruption du comptage;

— un comparateur logique (CMP) apte à fournir à la sortie (9) un signal qui indique l'égalité des signaux qu'il reçoit de la sortie dudit réseau d'interpolation (RI) et de la première sortie (5) dudit compteur (C);

— un réseau logique séquentiel (RS) qui reçoit le signal de sortie dudit générateur d'impulsions (GP), le signal de sortie (9) dudit comparateur logique (CMP) et la seconde sortie (8) dudit compteur (C); qui fournit audit compteur (C), à travers une première sortie (4), ledit signal de validation quand il reçoit une impulsion dudit générateur d'impulsions (GP), ou ledit signal de remise à zéro quand il reçoit le signal d'égalité dudit comparateur logique (CMP); et qui fournit à sa seconde sortie (10) un signal dont le niveau logique est actif pour un interval de temps égal à $N_{oa} . T_{cv}$, à partir de l'instant où il reçoit une impulsion dudit générateur d'impulsions (GP);

— une porte logique (P) du type OU-exclusif, apte à fournir à la sortie qui est aussi la sortie dudit circuit de quadrature et interpolation (SIA, SIB), l'OU exclusif de la valeur logique présente sur la seconde sortie (10) dudit réseau logique séquentiel (RS) et de la valeur logique provenant dudit circuit séparateur de signe (S).

3. Récepteur de signaux multifréquence de clavier codifiés en MIC, suivant la revendication 2, caractérisé en ce que le produit de l'interpolation calculé par le réseau d'interpolation (RI) est égal a $N_{oa}$ seulement si les échantillons en amont ($x_{n-1}$) et en aval ($x_n$) du registre (RX) ont un signe opposé.

**Patentansprüche**

1. Empfänger für drucktastenerzeugte PCMcodierte Mehrfrequenzsignale, bestehend aus digitalen Filtern (FA, FB), denen den Pegel der von den Filtern erzeugten Signale steuernde Schaltungen (CLA, CLB) und eine die mit Hilfe der Mehrfrequenzsignale gesendete Ziffer erkennende Schaltung (CR) folgen, dadurch gekennzeichnet, daß die digitalen Filter (FA, FB) zwei digitale Filter mit getrenntem Band sind und zwischen die steuernden Schaltungen (CLA, CLB) und die die Ziffer erkennende Schaltung (CR) zwei Begrenzer-Interpolator-Schaltungen (SIA, SIB) eingesetzt sind, die die Zeitpunkte des Nulldurchgangs der analogen Signalverläufe, aus denen die PCM-codierten Mehrfrequenzsignale erhalten wurden, bestimmen können.

2. Empfänger für drucktastenerzeugte PCMcodierte Mehrfrequenzsignale nach Anspruch 1, dadurch gekennzeichnet, daß jede der Begrenzer-Interpolator-Schaltungen (SIA, SIB) aus folgenden Einzelschaltungen besteht:

— einem Parallel-Register (RX), das für die von einem der digitalen Filter (FA, FB) empfangenen Abtastwerte als Verzögerungsstrecke um eine Zeit gleich der Abtastperiode ($T_c$) dient;

— einer Vorzeichentrennschaltung (S), die das Vorzeichen der von diesem digitalen Filter empfangenen Abtastwerte bestimmt und ausgangsseitig ein Signal abgibt, dessen logischer Pegel sich mit dem Vorzeichen der empfangenen Abtastwerte ändert;

— einem Interpolier-Netzwerk (RI), das über eine erste den Absolutbetrag separierende Schaltung (M1) und über eine zweite den Absolutbetrag separierende Schaltung (M2) vor bzw. hinter dem Register (RX) angeschlossen ist und in jedem Abtastintervall ($T_c$) an den beiden Abtastwerten, von denen der eine vor ($x_{n-1}$) und der andere nach ($x_n$) dem Register vorliegt, eine lineare Interpolation gemäß dem Ausdruck

$$N_{oa} = I \left\{ \frac{|x_{n-1}| \cdot N}{|x_n| + |x_{n-1}|} \right\}$$

durchführt, wobei I=Angabe, daß vom nachfolgenden in Klammern gesetzten Ausdruck der ganzzahlige Teil zu nehmen ist; N=Verhältnis der Frequenz ($f_{cv}$) eines Taktsignals (CK) zur Abtastfrequenz ($f_c$); $|x_{n-1}|$=Absolutwert des Abtastwerts nach dem Register, geliefert von der zweiten separierenden Schaltung (M2); $|x_n|$=Absolutwert des Abtastwerts vor dem Register, geliefert von der ersten separierenden Schaltung (M1); $N_{oa}$=Produkt der Interpolation, das als Ausgangssignal des Interpolier-Netzwerks (RI) geliefert wird;

— einer Impulserzeugerschaltung (GP), die jedesmal dann, wenn an ihrem mit dem Ausgang (6) der Vorzeichentrennschaltung (S) verbundenen Eingang eine Änderung des logischen Pegels auftritt, einen Impuls einer Länge gleich der Periode ($T_{cv}$) des Taktsignals (CK) erzeugt;

— einem synchronen Modulo-N-Zähler (C), der an seinem ersten Ausgang (5) den gegenwärtig erreichten Wert und an seinem zweiten Ausgang (8) dann, wenn der Maximalwert erreicht ist, einen Impuls abgibt und der zum Beginnen bzw. Anhalten des Zählens ein Betätigungssignal bzw. ein Rückstellsignal empfängt;

— einem logischen Komparator (CMP), der an seinem Ausgang (9) ein Signal abgibt, das anzeigt, daß die Signale gleich sind, die er einerseits vom Ausgang des Interpolier-Netzwerks (RI) und andererseits vom ersten Ausgang (5) des Zählers (C) empfängt;

— einem sequentiellen Logiknetzwerk (RS), das das Ausgangssignal (von 7) der Impulserzeugungsschaltung (GP), das Ausgangssignal (von 9) des logischen Komparators (CMP) und das zweite Ausgangssignal (von 8) des Zählers (C) empfängt und den Zähler (C) über einen ersten Ausgang (4) jedesmal dann mit dem Betätigungssignal speist, wenn er von der Impulserzeugerschaltung (GP) einen Impuls empfängt, oder mit dem Rückstellsignal speist, wenn er vom logischen Komparator (CMP) das die Signalgleichheit anzeigende Signal empfängt; und weiterhin an einem zweiten Ausgang (10) ein Signal abgibt, dessen logischer Pegel für eine Zeitspanne gleich $N_{oa} \cdot T_{cv}$, beginnend vom Zeitpunkt, zu dem es einen Impuls von der Impulserzeugerschaltung (GP) empfängt, aktiv ist;

— einem logischen Tor (P) des Typs Exclusiv-ODER, das an seinem Ausgang, der auch der Ausgang der Begrenzer-Interpolator-Schaltung (SIA, SIB) ist, das exclusive ODER des logischen Werts, der am zweiten Ausgang (10) des sequentiellen Logiknetzwerk (RS) liegt, und des logischen Werts, der von der Vorzeichentrennschaltung (S) kommt, abgibt.

3. Empfänger für drucktastenerzeugte PCMcodierte Mehrfrequenzsignale nach Anspruch 2, dadurch gekennzeichnet, daß das vom Inter-

polier-Netzwerk (RI) berechnete Interpolations-produkt nur dann gleich $N_{oa}$ ist, wenn die vor $(x_{n-1})$ und nach $(x_n)$ dem Register (RX) vor-handenen Abtastwerte entgegengesetztes Vor-zeichen haben.

FIG. 1

FIG. 3

| y | 7 | 9 | 8 | 10 | 4 | Y |
|---|---|---|---|----|---|---|
| 0 | 1 | – | – | 0 | 0 | 0 |
| 0 | 0 | 0 | – | 1 | 1 | 1 |
| 0 | 0 | 1 | – | 0 | 0 | 0 |
| 1 | – | 0 | 0 | 1 | 1 | 1 |
| 1 | – | 0 | 1 | 1 | 0 | 0 |
| 1 | – | 1 | – | 0 | 0 | 0 |

FIG. 5

FIG. 2

FIG. 4